# EUROPEAN PATENT APPLICATION

(11) **EP 4 629 001 A1**
(43) Date of publication of application: **08.10.2025**
(21) Application number: 25168689.5
(22) Date of filing: 04.04.2025
(51) Int. Cl.: G05B 13/02, G05B 19/418

(54) **ADAPTIVE MACHINING TO REDUCE PART DISTORTION AFTER FORGING**

(30) Priority: 04.04.2024 US 202418627109
(71) Applicant: RTX Corporation, Farmington, CT 06032 (US)
(72) Inventor: GUO, Changsheng, Farmington, 06032 (US); ZHANG, Huan, Farmington, 06032 (US); KOUNTANYA, Raja K., Farmington, 06032 (US); VENKATESH, Vasisht, Farmington, 06032 (US)
(74) Representative: Dehns

(57) **Abstract**

A method of adaptive machining of a forged part includes the steps of 1) forming a rough part and subjecting the rough part to heat treatment, 2) cooling the rough part, 3) performing rough machining (65) on the rough part, 4) measuring a geometry (67) of the rough part after the rough machining, and associating the measured geometry with heating and cooling parameters from steps 1) and 2), and providing the measured geometry to a machine learning module (66), 5) providing the machine learning module (66) with a training set that associates the measured geometry with a predicted reaction to finish machining and 6) adapting a finish machining strategy based upon the prediction. A system (50) is also disclosed.

## Description

### BACKGROUND

This application relates to a method and apparatus to provide an adaptive machining strategy for a part based upon predicted residual stress from an earlier forging.

Many manufactured components are formed by forging. In forging, a metal intermediate part is subject to heat treatment, and then cooling. Machining then occurs to bring the intermediate part to a final shape.

Based upon variations in the heat treatment and cooling, a residual stress across the intermediate part may vary across a plurality of the intermediate parts. This will impact the machining, as there can be part distortion due to the residual stress.

### SUMMARY

It should be understood that any or all of the features or embodiments described herein can be used or combined in any combination with each and every other feature or embodiment described herein unless expressly noted otherwise.

According to a first aspect, there is provided a method of adaptive machining of a forged part includes the steps of 1) forming a rough part and subjecting the rough part to heat treatment, 2) cooling the rough part, 3) performing rough machining on the rough part, 4) measuring a geometry of the rough part after the rough machining, and associating the measured geometry with heating and cooling parameters from steps 1) and 2), and providing the measured geometry to a machine learning module, 5) providing the machine learning module with a training set that associates the measured geometry with a predicted reaction to finish machining and 6) adapting a finish machining strategy based upon the prediction.

Optionally, the machine learning module considers temperatures on the rough part during the heat treatment of step 1).

Optionally, the machine learning module considers a cooling rate of the rough part during step 2).

Optionally, the finished part is an aerospace part.

Optionally, the aerospace part is one of an integrally bladed rotor, a casing, a blade, and a turbine disk.

According to a second aspect, there is provided a system for machining a part after a forging operation includes at least one machine for providing rough machining and subsequent machining and a control for the at least one machine. The control has a machine learning module and processing circuitry operable to associate heat treatment information from a heat treating system and cooling information from a cooling system, with measured information from rough machining to predict a residual stress and operable to develop and implement a finished machining strategy for the at least one machine based upon the prediction.

Optionally the machine learning module is operable to predict the residual stress based on temperatures on the rough part during the heat treatment.

Optionally the machine learning module is operable to predict the residual stress based on a cooling rate of the rough part.

Optionally the finished part is an aerospace part.

Optionally the aerospace part is one of an integrally bladed rotor, a casing, a blade, and a turbine disk.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Certain exemplary embodiments will now be described in greater detail by way of example only and with reference to the accompanying drawings, in which:
Figure 1 schematically shows manufactured parts;
Figure 2A schematically shows a heat treatment system;
Figure 2B schematically shows a cooling system;
Figure 2C is a graph showing heat transfer temperature variation over time and across plural parts;
Figure 2D is a graph showing cooling temperature variation over time and across plural parts;
Figure 3 shows a system and control for predicting part distortion, and for formulating a final machining strategy;
Figure 4A shows a rough part;
Figure 4B shows a final part;
Figure 4C shows a test method;
Figure 5 shows three results in reducing distortion utilizing this disclosure; and
Figure 6 is a flow chart of a disclosed method.

### DETAILED DESCRIPTION

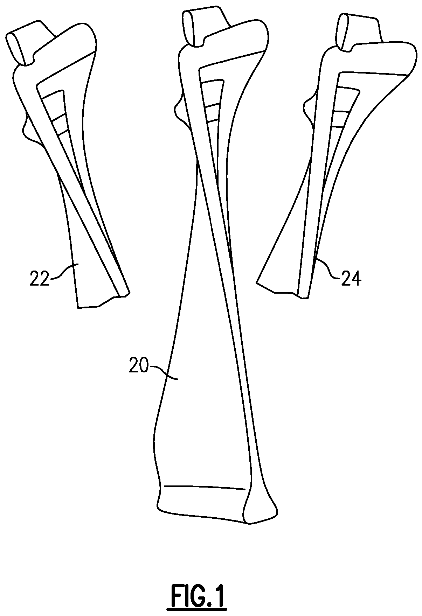

Figure 1 schematically shows a part 20, and other parts 22 and 24 which have been formed by forging and machining operations. As can be seen, there is some variation across the three parts. This can occur as a heat treating and cooling operation may provide variable parameters to several distinct ones of the parts. Variations of heating and cooling could lead to variable bulk residual stresses in the part.

The variation across the parts can occur as a result of bulk residual stress redistribution due to material removal in the forged part which then results in uncontrolled distortion after machining. This can lead to time delays, quality issues and high manufacturing costs. The residual stress variability can come from process variations such as heat treating temperatures and cooling rates. Currently, the most widely used approach to mitigate to post machining distortion is to remove a small stock on each machine pass then measure or probe the distortion. Then, trial and error manual adjustment to the machining process can be made.

In this disclosure, adaptive machining, or machine learning, is utilized to create an effective digital twin that will allow a prediction of expected residual stress, and thus expected distortion after machining.

The parts 20/22/24 may be aerospace parts, in examples they may be an integrally bladed rotor, a casing, a blade, and a turbine disk.

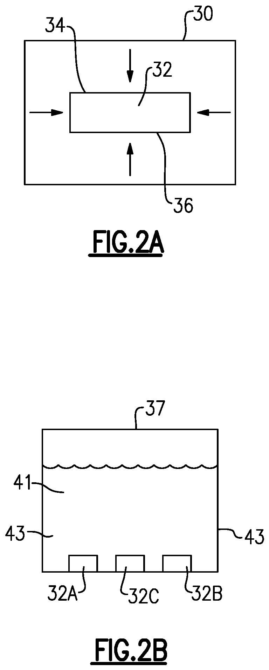

Figure 2A schematically shows a heat treating system 30 for providing heat treatment to an intermediate part 32. Intermediate part 32 has an upper surface 34 and a lower surface 36. The temperatures at the upper and lower surfaces 34 and 36 may vary.

Figure 2B schematically shows a cooling system 37 with cooling fluid 41. In practice, it need not be a liquid 41 but could simply be another way of providing a cooling tank. As one example the liquid can be oil. Air cooling may also be used alternatively. As shown, some parts 32A and 32B are closer to walls 43 compared to a central part 32C. The cooling rate from the parts 32A/32B compared to part 32C will vary.

Similar part position differences during the Figure 2A heating, variations similar to the Figure 2B cooling can occur by placing the parts in various locations in the oven when multiple parts are heated in a batch.

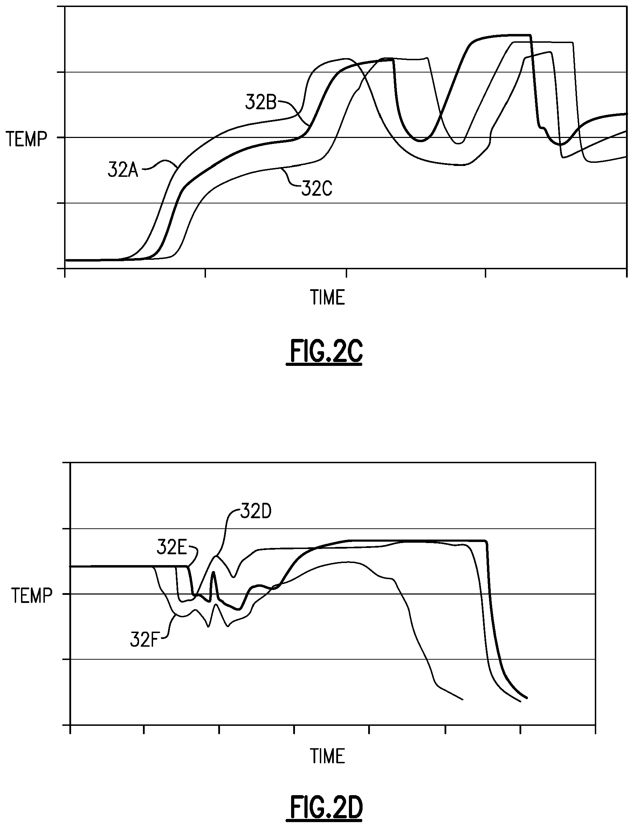

The variations in temperatures in the heat treatment step of Figure 2A are illustrated in Figure 2C. This variation is shown across parts 32A/B/C.

A similar graph is shown for the cooling step 37 in Figure 2D across parts 32D/E/F.

These variations can result in distinct residual stress and part distortion when machining occurs.

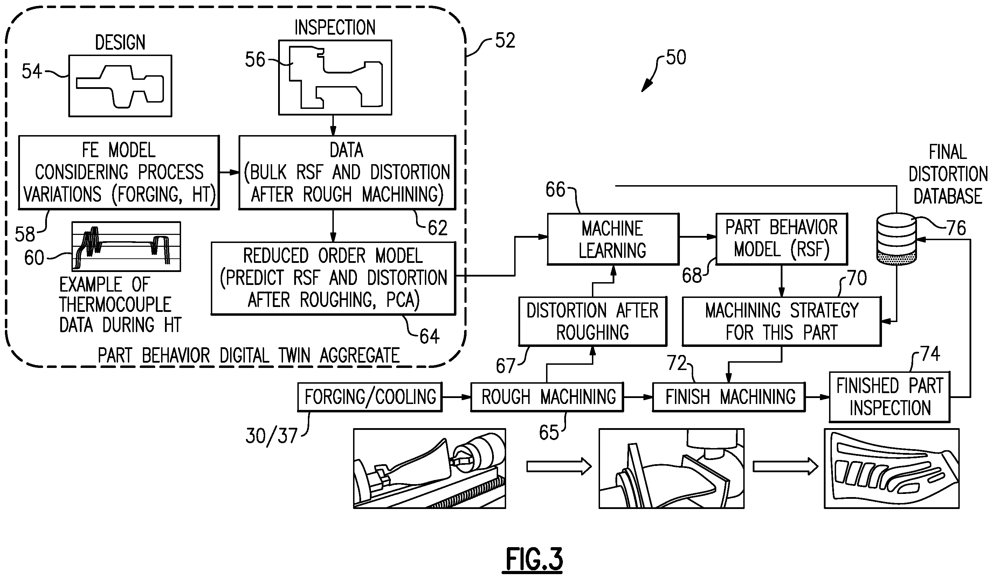

Figure 3 discloses a system 50 for addressing this variation. A control 52 includes a computing device. A model 58 of a part design 54 is shown along with another example 60 of the Figure 2C temperature variation. The results of model 58 are sent to a data system 62. Inspection data from an actual finished part 56 also feeds into the data system 62. The results for various heat treatment conditions are produced using model 58 and sent to 62. A reduced order model 64 communicates with the data 62 to predict a residual stress and distortion after rough machining for the actual part 56. This feeds into one or more machine learning models (e.g., networks) 66.

The computing device 52 may include one or more computer processors, memory, storage means, network devices, input and/or output devices, and/or interfaces. The computing device 52 may be operable to execute one or more software programs. The computing device 52 may be operable to communicate with one or more networks established by one or more computing devices. The memory may include UVPROM, EEPROM, FLASH, RAM, ROM, DVD, CD, a hard drive, Cloud data, or other computer readable medium which may store data and/or the functionality of this description. The computing device 52 may be a desktop computer, laptop computer, smart phone, tablet, or any other computer device. Input devices may include a keyboard, mouse, touchscreen, etc. The output devices may include a monitor, speakers, printers, etc. Computing device 52 may include one or more processors coupled to memory. The computing device 52 may be operable to perform any of the functionality disclosed herein.

In one example, machine learning network 66 utilizes neural network(s). The neural networks are trained with historical data relating to machining, and may be used to draw inferences about what residual stress a future part will likely have based upon current heat treatment and cooling parameters experienced in forming the future part.

Other variables that could affect the residual stress, include friction between a tool and the workpiece that will form the rough part. In addition, material variations can result in different residual stress in the rough part. These factors are all included in the model 58. Model 58 uses this data as input to produce results. Therefore, the results data in 62 already contain the influence of these factors.

The machine learning network 66 can predict what the residual stress is for this particular part. This can then communicate with a part behavior model 68 to develop a machine learning strategy 70 for the particular part.

The forged/cooled part downstream of steps 30/37 is subject to rough machining 65. The amount of distortion after this rough machining is measured at 67, and communicates to the machine learning module 66. This then tells the part behavior model 68 how further machining should be performed, and a machining strategy is developed at step 70. Part behavior model 68 is effectively a digital twin of the rough part associated with the heating/cooling parameters.

Finish machining then occurs at step 72.

As examples, the machining strategy can verify location, sequence, clamping forces, speed, etc.

The results of the finish machining is inspected at step 74, and that result is communicated back to a final distortion database 76. Final distortion database 76 communicates to both the machine learning module 66 and the machining strategy step 70.

The inspection step may occur in production and training.

Thus, after rough machining, the system 50 is able to predict an efficient machining strategy for the finish machining 72.

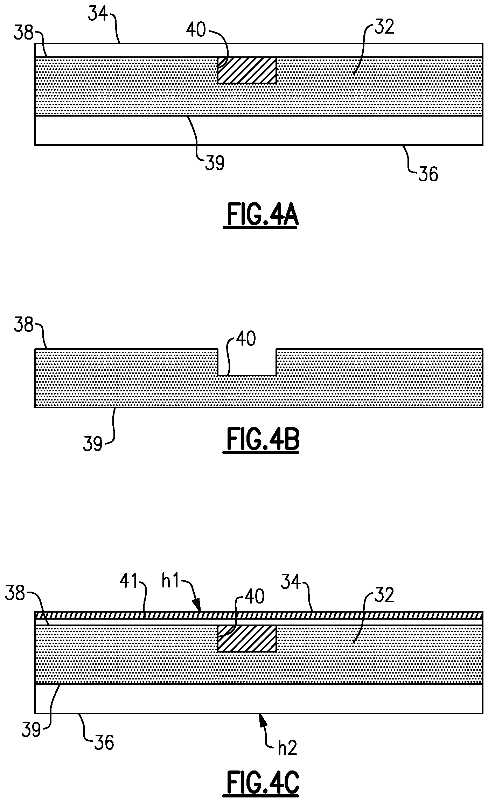

Figure 4A shows a rough forged/cooled part 32. The top surface 34 and bottom surface 36 are shown. The top surface 34 is subject to a first temperature during heat treatment and the bottom surface 36 is subject to a second temperature. The temperatures are not necessarily equal.

The rough part 32 is machined to have a top surface 38 and a bottom surface 39 as shown in Figure 4B. A ditch 40 is also machined.

As shown in Figure 4C, a method under this disclosure initially removes half of the top layer 38 to a level such as shown at 41.

The disclosed method uses information gained earlier in the machining process, and in particular during rough machining, to predict the residual stress state in the part while there is still stock left. Subsequent semi-finishing and/or finishing steps can be adjusted accordingly to obtain an acceptable part. Again, information developed and stored in the machine learning system 66 is utilized to predict the residual stress, and thus the likely distortion.

The flatness of this top surface is measured, and the system can decide how much additional top layer to be removed to achieve a flat top after the rest of the machining steps.

In Figure 4C, an initial rough machining step is performed to remove the top layer down to top surface 38. The bottom surface between layers 36 and 39 is then removed, and then the ditch 40 is formed. At that point, the flatness of the top surface is measured, which represents the distortion value for a production case.

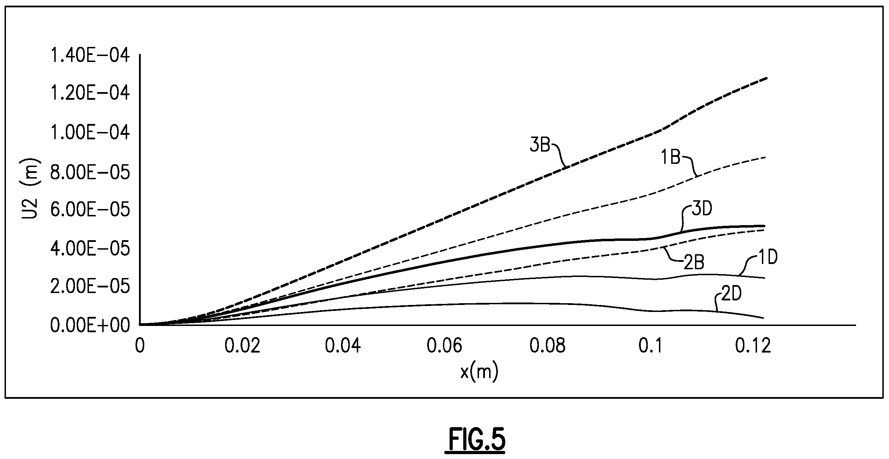

In one real world test, a heat transfer characteristic h1 is varied relative to a heat transfer characteristic heat transfer coefficient h2. In three cases, the heat transfer coefficient h2 was maintained constant while the heat transfer characteristic h1 was varied at three levels, which produced 3 parts, 1, 2, 3. The result in distortion is shown in Figure 5.

Three distortion variations are shown graphically in Figure 5. The solid line results are achieved reduction and distortion across a part with this method. The dashed lines would be the baseline expected distortion without the disclosed variation in the machining parameters. As can be seen, with the disclosed system, the amount of resulting distortion is reduced between the baseline or expected distortion 1B, 2B and 3B, compared to the final distortion 1D, 2D and 3D.

The horizontal axis of Figure 5 represents the part length from Figure 4, that is - the horizontal distance from the center line of the part. The vertical axis is the distortion of the part. The line represent the distortion variation of the part. The origin is the distortion at the center of the part, the highest is the distortion of its most top right point on the part. Basically, the subject part curved up after machining. 3B curved the most and 2D curved the least or almost flat.

In the three examples distortion is reduced by greater than 50% and in at least one example by over 90%.

The three examples were selected to be at distinct temperature differences between the top surface 34 and bottom surface 36.

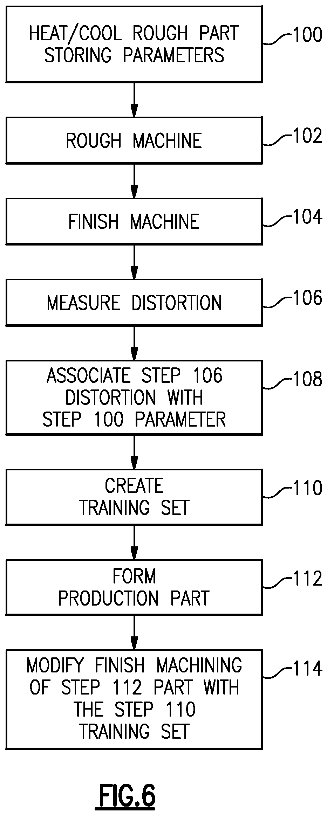

A flow chart of a disclosed method is shown in Figure 6. At an initial step, heating and cooling is performed on a rough part of step 100. The heating step could be an oven, but could also be a forging or casting. A model for forging or casting can be used to predict bulk residual stresses. Parameters of the heating and cooling are stored. Rough machining then occurs on the rough part at step 102. Finish machining then occurs at step 104. At step 106, distortion after the finish machining is measured. At step 108, the step 106 distortion is associated with the step 100 parameters. A training set is then created at 110 for use by a machine learning module 66. Subsequently, production rough parts are formed at 112 and subject to heating and cooling after step 112. After rough machining, a control is able to modify finish machining of the step 112 part with the step 110 training set.

Although exemplary embodiments have been shown, a worker of ordinary skill in this art would recognize that modifications to the disclosed embodiments may come within the scope of the invention as defined by the appended claims. For that reason, the following claims should be studied to determine the true scope of protection.

## Claims

1. A method of adaptive machining of a forged part, the method comprising the steps of:
1) forming a rough part and subjecting the rough part to heat treatment;
2) cooling the rough part;
3) performing rough machining (65) on the rough part;
4) measuring a geometry (67) of the rough part after the rough machining, and associating the measured geometry with heating and cooling parameters from steps 1) and 2), and providing the measured geometry to a machine learning module (66);
5) providing the machine learning module (66) with a training set that associates the measured geometry with a predicted reaction to finish machining; and
6) adapting a finish machining strategy based upon the prediction.

2. The method as set forth in claim 1, wherein the machine learning module considers temperatures on the rough part during the heat treatment of step 1).

3. The method as set forth in claim 1 or 2, wherein the machine learning module (66) considers a cooling rate of the rough part during step 2).

4. The method as set forth in any preceding claim, wherein the finished part is an aerospace part (20, 22, 24).

5. The method as set forth in claim 4, wherein the aerospace part is one of an integrally bladed rotor, a casing, a blade, and a turbine disk.

6. A system (50) for machining a part after a forging operation, the system comprising:
at least one machine for providing rough machining and subsequent machining;
and
a control (52) for the at least one machine, the control having a machine learning module (66) and processing circuitry operable to associate heat treatment information from a heat treating system and cooling information from a cooling system with measured information from rough machining to predict a residual stress and operable to develop and implement a finished machining strategy for the at least one machine based upon the prediction.

7. The system as set forth in claim 6, wherein the machine learning module is operable to predict the residual stress based on temperatures on the rough part during the heat treatment.

8. The system as set forth in claim 6 or 7, wherein the machine learning module is operable to predict the residual stress based on a cooling rate of the rough part.

9. The system as set forth in any of claims 6 to 8, wherein the finished part is an aerospace part (20, 22, 24).

10. The system as set forth in claim 9, wherein the aerospace part is one of an integrally bladed rotor, a casing, a blade, and a turbine disk.
